# EUROPEAN PATENT APPLICATION

(11) **EP 3 937 099 A1**
(43) Date of publication of application: **12.01.2022**
(21) Application number: 20184471.9
(22) Date of filing: 07.07.2020
(51) Int. Cl.: G06Q 10/06, G06Q 50/02, G06Q 50/06

(54) **A METHOD AND DEVICES FOR USE IN MINING ACTIVITY SCHEDULING**

(71) Applicant: ABB Schweiz AG, 5400 Baden (CH)
(72) Inventor: ÅSTRAND, Max, 904 41 Röbäck (SE); LINDKVIST, Rickard, 725 91 Västerås (SE)
(74) Representative: Qip Patentanwälte Dr. Kuehn & Partner mbB

(57) **Abstract**

A method (20) for use in mining activity scheduling is disclosed. The method (20) is performed in a device (7) and comprises: obtaining (21) information on energy consumption of a machine (6) performing a mining activity; and establishing (22), based on the information on energy consumption, progress of the mining activity. A device (7) configured to perform the method is also disclosed.

## Description

### Technical field

The technology disclosed herein relates generally to the field of mining, and in particular to a method and devices for use in mining activity scheduling.

### Background

In a typical mine, such as in an underground mine, there is a number of different activities which have to be coordinated. The mine therefore operates under a short-term mine schedule in which start and end times for all activities are determined and monitored. Progress signals on the individual activities, such as activity start and activity stop, are reported by the operator or machine performing the activity. Today operators performing the activities report when an activity is started and when it is finished. This reporting is done, for instance, over radio with a control room (or operations center), via direct communication with a foreman who then talks with the control room or by use of a fleet manager system.

A drawback with this type of reporting is that it often induces large uncertainties in the accuracy of the progress signals, caused by the manual reporting. For instance, the operator involved in an activity has to press a button in order to start the activity when being at the correct location and ready to operate, and to stop the activity when finished. In this manual handling, there are various inaccuracies involved, such as, e.g., the activity start signal coming in late, the activity start and activity stop signals coming in simultaneously at the end of the activity, that no signal at all is sent or that information that is lacking is crudely estimated by a scheduler or foreman.

With such high uncertainty in the information on activities, and hence low data quality, it is difficult to optimize activity parameters such as nominal activity durations for scheduling, which leads to poor data reliance as well as inducing unproductive buffers in the activity schedule to accommodate for the uncertainty. A technical solution is needed to address these issues.

### Summary

An objective of the present invention is to solve, or at least alleviate, at least one of the above-mentioned problems. A particular objective is to enable a more accurate scheduling of mining activities. Another particular objective is to provide an efficient scheduling of the mining activities. Still another objective is to enable an efficient use of machines used in mining.

These objectives and others are, according to an aspect, achieved by a method for use in mining activity scheduling. The method may be performed in a device and comprises obtaining information on energy consumption of a machine that is performing a mining activity and, based on the energy consumption establish progress of the mining activity.

The method brings about several advantages. The method provides an improved accuracy in progress reporting of different mining activities. This in turn enables a more efficient activity scheduling, and thus also mining operation, by minimizing, or even removing, the need of unproductive buffers in the mining activity schedule. The method increases transparency of the current mining activity and thus aids in e.g. scheduling for upcoming shifts and shift hand-overs. It also provides increased data quality, whereby optimization of activity parameters is enabled. Further, a more efficient use of the machines is obtained, e.g. by enabling minimization of any time periods during which the machines are unused, whereby costs can be reduced. Still further, accurate operation analytics depend critically on the underlying data, and hence the method also provides improvements when calculating Key Performance Indicators (KPI) and operations analytics on activity level. As noted earlier, having improved data quality leads to higher operational transparency, which in turn leads to a safer operation with lower uncertainties.

The objectives are, according to an aspect, achieved by a computer program for a device for use in mining activity scheduling. The computer program comprises computer program code, which, when executed on at least one processor causes the at least one processor to perform the method.

The objectives are, according to an aspect, achieved by a computer program product comprising a computer program and a computer readable means on which the computer program is stored.

The objectives are according to an aspect achieved by a device for use in mining activity scheduling. The device is configured to: obtain information on energy consumption of a machine performing a mining activity; and establish, based on the information on energy consumption, progress of the mining activity. Advantages mentioned for the method are brought about by the device as well.

Further features and advantages of the present invention will become clear upon reading the following description and the accompanying drawings.

### Brief description of the drawings

Figure 1 illustrates a mining activity schedule.
Figure 2 illustrates a conceptual information flow in a mining environment.
Figure 3 illustrates a flow chart of steps of a method in accordance with the present invention.
Figure 4 illustrates a flow chart of steps of various embodiments of the method in accordance with the present invention.
Figure 5 illustrates schematically a device and means for implementing embodiments of a method in accordance with the present invention.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Briefly, the invention provides, in various embodiments, a method and devices for estimating progress of activities (also denoted mining tasks or individual/unit operations within the field), performed, for instance, by mining machines and/or mining vehicles. In the following, any type of machine, movable or not, that is used in any mining operation, is collectively denoted machine. It is noted that a first machine, e.g. a vehicle, may hold or otherwise comprise a second machine, e.g. an electric tool. The activity progress is estimated based on information on energy consumption and possibly additional electricity information or electricity data about any such machines used in the mining activity.

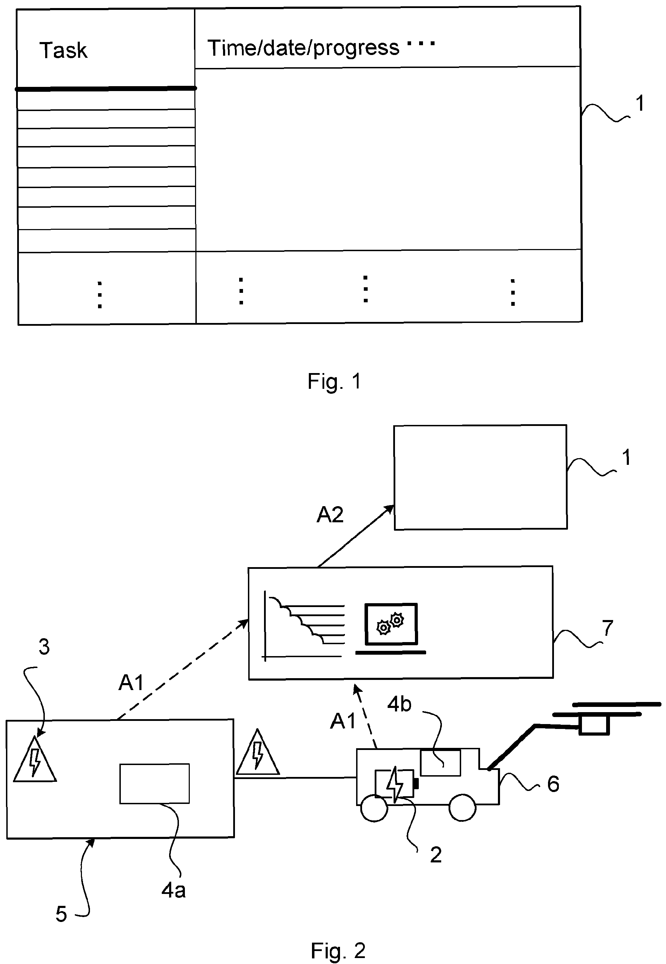

First, for sake of completeness and understanding, a brief description of mining scheduling is provided below with reference to figure 1.

Figure 1 illustrates an exemplary and highly schematic mining activity schedule 1. Mine production scheduling (sometimes called short interval control or short-term planning) requires the coordination of a number of activities. As an example, in the left-hand column of the mining activity schedule 1, a number of activities may be listed, and in the right-hand column, the progresses of the activities may be shown. Further, time and/or date may additionally or alternatively be shown. It is noted that it is common to have access to several views and/or shifting therebetween. Having scheduled the activities, a person, e.g. a supervisor, foreman or scheduler, that has access to the mining activity schedule 1 can monitor the progress of each activity and/or the status of the activity and take action if needed. The progress can be shown in different ways, e.g. in a timeline view. Other functions, such as alarms and notifications, may also be available for e.g. the supervisor. The individual activities in the schedule relies on default parameters (activity parameters), such as nominal durations and machine travel times, which may be hard to estimate.

In this context, it is noted that the progress of a mining activity can be measured in different ways, depending e.g. on the specific activity in question. For instance, a continuously performed activity can be measured in percentage of activity having been completed, while for an activity comprising several actions, such as drilling holes or bolting, the progress can be measured in number of completed holes or the number of bolted bolts.

Figure 2 illustrates an environment in which embodiments of the present invention may be implemented. A mine typically comprises a number of mining machines and mining vehicles, also denoted production machines. As noted earlier, such production machines are denoted simply machines and indicated by reference numeral 6. For instance, in order to excavate materials and transport it to the surface, machines 6 such as excavators, Load-Haul-Dump machines and trucks may be used. Further examples on machines 6 comprise drill rigs, lifts, scale rigs and shotcreters. In essence, the invention is applicable for use in relation to any machine 6 requiring electric energy for its operation. The machine 6 may be equipped with one or more batteries 2 for providing energy for its operation, or it may be connected to a power grid 3 in order to be powered.

According to different embodiments of the invention, a module 4a, 4b is placed either directly on a machine 6 and/or embedded in a power grid control system 5. As indicated at the two arrows indicated by Ai, electricity data, and in particular energy consumption of the machine 6, is sent from the one or more modules 4a, 4b to a device 7. The device 7 may comprise a processing unit comprising algorithms for calculating e.g. activity progress based on the electricity data received from the one or more modules 4a, 4b. The device 7 may then determine whether the machine 6 is working, is parked, or is moving, that is, the device 7 may be configured to classify the working status of the machine 6. The device 7 may also be configured to determine progress on the current activity, for instance by combining such information with any other information e.g. from yet additional sources.

By monitoring the transition between different statuses of the machine 6, the device 7 can determine when an activity starts and stops. For instance, a transition of the type "Working" to "Moving" can be interpreted as a "activity stop" signal, while "Moving" to "Working" can be interpreted as a "activity start" signal. As indicated at arrow A2, information determined by the device 7 can be used for being displayed on a screen or be conveyed to e.g. a supervisor in any other way. The information may be used in the mining activity schedule 1. The activity/activities scheduled on a particular machine 6 may be known in advance, and therefore information about activities can also be used in order to improve the quality of the status estimations. This information about a particular activity may, for instance, comprise the planned start time, the nominal duration, the machine 6 and operator scheduled to perform the activity, and the location of the activity within the mine complex.

A method and devices of automatically reporting on activities, for instance, activity start and activity stop is provided. This reporting is valuable in the mine scheduling. In the method, use is made of electricity information from, e.g., the electrical grid 5 and/or a battery 2 of the machines 6. The method may be implemented in a device 7 comprising one or more hardware and/or software modules that register energy consumption of, and in some embodiments additional electricity information about the machines 6. The method may also be implemented in a system comprising such device and means for providing the device with energy consumption of the machines 6, and possibly additional electricity information about them.

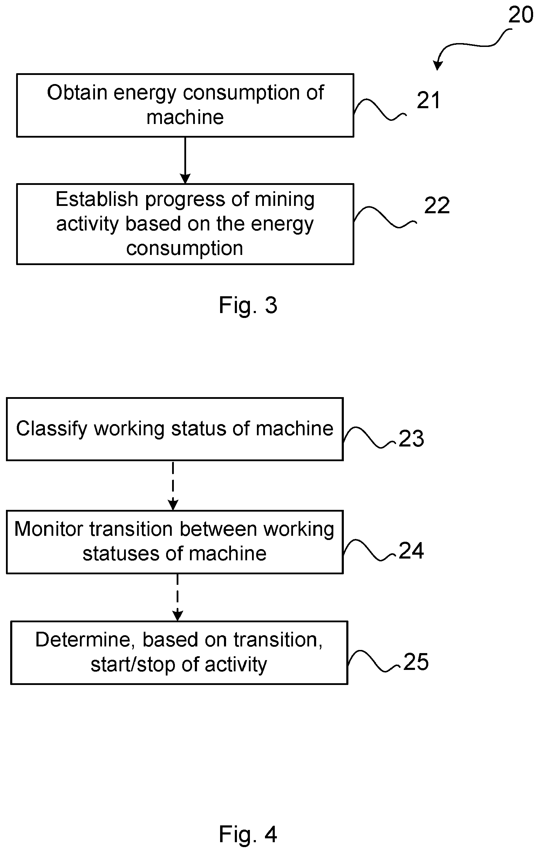

Figure 3 illustrates a flow chart of steps of a method in a device 7 in accordance with various embodiments of the present invention. The method may be implemented in a device comprising one or more hardware and/or software modules that register the energy consumption of the machines 6.

Figure 3 illustrates a flow chart of steps of an embodiment of a method 20 in accordance with the present invention. The method 20, for use in mining activity scheduling, is efficient for determining activity progress. The method 20 is performed in a device 7 and comprises a step of obtaining 21 information on energy consumption of a machine 6 that is performing a mining activity. The method 20 further comprises a step of establishing 22, based on the obtained information on energy consumption, the progress of the mining activity. As has been described earlier, the progress can be measured in different ways, e.g. as a percentage or as a number of finished activities of a set of activities.

The method 20 provides an improved accuracy as well as efficiency in scheduling and reporting by enabling a more accurate progress estimation. The electricity information, and in particular energy consumption, can be obtained very fast, as the device 7 may continuously (or regularly or now and then) obtain signals containing the desired electricity information.

The activity progress may be thus established based on the energy consumption of the machines 6 that are used in the mining. There is an increasing number of such machines 6 that are electrified and therefore an increasing amount of information on their electricity usage will be available. As a particular example, an activity may comprise the drilling of a set of holes. The number of drilled holes so far, i.e. the progress of this specific activity, can be estimated by comparing different levels of instantaneous energy consumption of the machine 6. When a machine 6, such as a drill rig in this example, is working (drilling) it may require more energy and its energy consumption is therefore peaking. By illustrating these peaks in the mining activity schedule 1, the supervisor may easily establish the progress of the activity by counting the peaks. It is noted that the counting can be made automatically, and the supervisor may get a "peak count" as a specific and increasing number shown on a screen. In essence, the method 20 is based on electrical analysis of energy consumption of a machine 6. Such energy consumption may be provided by the module 4a, 4b to the device 7, and the device 7 may then use it for calculating progress of the ongoing activity. The method is highly usable and valuable e.g. for open pit and underground mining.

Figure 4 illustrates a flow chart of steps according to different embodiments of the method 20.

In an embodiment, the method 20 comprises classifying 23, based on the established progress, a working status of the machine 6. The working status may, for instance, comprises one or more of: machine working, machine parked, machine moving. In other embodiments, the establishing of the progress may be based on time period remaining of mining activity, time period spent in the mining activity and a specified interim event of the mining activity (for instance, that a drill hole, or a set of drill holes, has been completed). In the latter set of embodiments, the time periods remaining of mining activity may be translated into a working status, e.g. if time period remaining of a mining activity is zero, the working status may be "machine parked" or "machine idling".

In different embodiments, the method 20 may then comprise:
- monitoring 24 a transition between consecutive working statuses of the machine 6, and
- determining 25, based on the transition, start and/or stop of the mining activity.

In various embodiments, having determined that the mining activity has, for instance, stopped, it may then be possible to schedule another mining activity, or it may be an indication on that something has happened that needs attending to. Having determined that a mining activity has started, a time period until completion of the mining activity can be estimated. The progress of the mining activity may also be determined.

In some embodiments, the energy consumption of the machine 6 may be determined based on electricity information received from the power grid 3 from which the machine 6 receives its energy. The information on energy consumption may be conveyed by the module 4a of the power grid control system 5. In other embodiments, the energy consumption of the machine 6 may be determined based on electricity information about a battery 2 on the machine 6 from which it receives its energy. In such embodiments, a module 4b placed on the machine 6 may provide the device 7 with the electricity information about the battery 2, or the battery 2 may be provided with means for communicating electricity information, e.g. its battery status, to the module 4b or directly to the device 7. As has been noted earlier, a first machine may hold or comprise a second machine. In such case, the energy consumption about one or both of the first and second machines may be used. One of these machines may receive its energy from the other machine, i.e. indirectly from the electricity source (e.g. power grid 3 or battery 2).

In some embodiments, the method 20 the establishing 22 the progress of the mining activity comprises determining changes in the energy consumption of the machine 6. An example of such embodiment has been described earlier: a machine 6, e.g. a drill rig, requires more energy for some activities (e.g. in comparison with running idle or compared with another activity) and its energy consumption is therefore peaking. By illustrating these peaks in the mining activity schedule 1, the supervisor may easily establish the progress of the activity by counting the peaks. Other examples of such embodiments comprise loading buckets and bolting bolts.

In some embodiments, the determining 25 comprises determining, based on the transition, start and/or stop of the mining machine 6.

In various embodiments, the transition comprises one or more of: transition from working status "working" to working status "moving", transition from working status "moving" to working status "working". As has been described, a transition from working status "Working" to "moving" can be interpreted as a "activity stop", while a transition from working status "Moving" to "Working" can be interpreted as a "activity start".

In some embodiments, the method comprises scheduling another mining activity based on the determined 25 start and/or stop of the current mining activity.

In various embodiments, the progress of the mining activity is measured in time units or as percentage of activity having been completed.

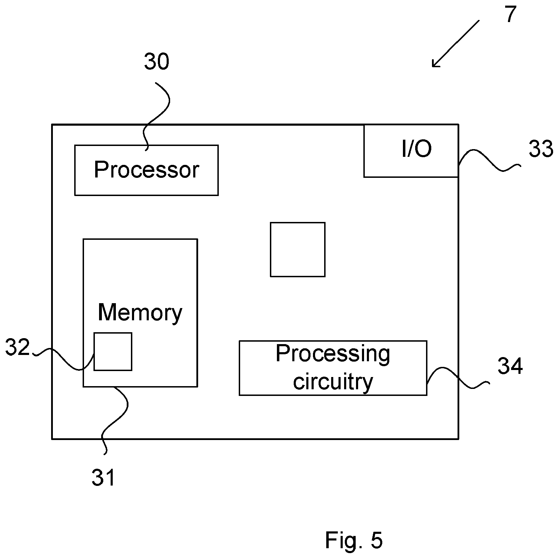

Figure 5 illustrates schematically a device 7 and means for implementing any of the embodiments of the method in accordance with the present invention. The method 20 may, as has been described in various embodiments, be performed in a device 7 comprising a processor 30, which in turn may comprise any combination of one or more of a central processing unit (CPU), multiprocessor, microcontroller, digital signal processor (DSP), application specific integrated circuit etc. capable of executing software instructions stored in a memory 31. The memory 31 may, for instance, be a computer program product. The processor 30 of the device 7 can be configured to execute any of the various embodiments of the method 20, for instance as described in relation to figures 3 and 4. The memory 31 can be any combination of read and write memory (RAM) and read only memory (ROM), Flash memory, magnetic tape, Compact Disc (CD)-ROM, digital versatile disc (DVD), Blu-ray disc etc. The memory 31 may also comprise persistent storage, which, for example, can be any single one or combination of magnetic memory, optical memory, solid state memory or even remotely mounted memory. The device 7 may comprise additional processing circuitry for implementing the various embodiments according to the present invention. The device 7 may also receive data usable in the determination of the progress of the mining activity in other ways. For instance, data may be gathered on the machine 6, and sent to a cloud computing environment providing computing resources, which processes the data, e.g. performs computations based thereon. The device 7 may then receive the processed data from the cloud environment for use in determination and/or presenting results.

The device 7 comprises an interface 33 for communication with other devices, for instance, with one or more modules 4a, 4b arranged on a machine 6 in order to obtain energy consumption of, and possibly further electricity information about the machine 6, e.g. its battery status. As has been described earlier, such module 4a, 4b may also or alternatively be arranged in connection with a power grid control system 5 for obtaining such electricity information from the power grid. Thus, depending on whether a particular machine 6 is powered from a battery or directly from a power grid 3, the one or more modules 4a, 4b may be placed differently. The interface 33 of the device 7 may, for instance, comprise same or different protocol stacks for communication with the one or more modules 4a, 4b.

A device 7 is provided for use in mining activity scheduling. The device 7 is configured to:
- obtain information on energy consumption of a machine 6 performing a mining activity; and
- establish, based on the information on energy consumption, progress of the mining activity.

The device 7 may be configured to perform the above steps e.g. by comprising one or more processors 30 and memory 31, the memory 31 containing instructions executable by the processor 30, whereby the device 7 is operative to perform the steps

In an embodiment, a device 7 is provided for use in mining activity scheduling. The device 7 comprises one or more processors and memory, the memory containing instructions executable by the processor, whereby the device is operative to: obtain information on energy consumption of a machine 6 performing a mining activity; and establish, based on the information on energy consumption, progress of the mining activity.

In an embodiment, the device 7 is configured to classify, based on the established progress, a working status of the machine 6.

In some embodiments, the device 7 is configured to:
- monitor a transition between consecutive working statuses of the machine 6, and
- determine, based on the transition, start and/or stop of the mining activity.

In some embodiments, the device 7 is configured to determine by determining, based on the transition, start and/or stop of the machine 6.

In some embodiments, the device 7 is configured to determine the energy consumption of the machine 6 based on electricity information received from a power grid 5 from which the machine 6 receives its energy, or configured to determine based on electricity information about a battery of the machine 6 from which the machine 6 receives its energy.

In some embodiments, the device 7 is configured to establish the progress of the mining activity by determining changes in the energy consumption of the machine 6.

The present invention also encompasses computer program products 31 comprising a computer program 32 for implementing the embodiments of the method according to any of the described embodiments, and a computer readable means on which the computer program 32 is stored. The computer program product, or the memory, thus comprises instructions executable by the processor 30. Such instructions may be comprised in a computer program, or in one or more software modules or function modules. The computer program product 31 may, as mentioned earlier, be any combination of random access memory (RAM) or read only memory (ROM), Flash memory, magnetic tape, Compact Disc (CD)-ROM, digital versatile disc (DVD), Blu-ray disc etc.

The invention has been described herein with reference to a few embodiments. However, as is appreciated by a person skilled in the art, other embodiments than the particular ones disclosed herein are equally possible within the scope of the invention, as defined by the appended patent claims.

## Claims

1. A method (20) for use in mining activity scheduling, the method (20) is performed in a device (7) and comprises:
- obtaining (21) information on energy consumption of a machine (6) performing a mining activity; and
- establishing (22), based on the information on energy consumption, progress of the mining activity.

2. The method (20) as claimed in claim 1, comprising:
- classify (23), based on the established progress, a working status of the machine (6).

3. The method (20) as claimed in claim 2, comprising:
- monitoring (24) a transition between consecutive working statuses of the machine (6), and
- determining (25), based on the transition, start and/or stop of the mining activity.

4. The method (20) as claimed in any of the preceding claims, wherein the energy consumption of the machine (6) is determined based on electricity information received from a power grid (5) from which the machine (6) receives its energy, or electricity information about a battery of the machine (6) from which the machine (6) receives its energy.

5. The method (20) as claimed in any of the preceding claims, wherein the establishing (22) the progress of the mining activity comprises determining changes in the electricity consumption of the machine (6).

6. A device (7) for use in mining activity scheduling, the device (7) being configured to:
- obtain information on energy consumption of a machine (6) performing a mining activity; and
- establish, based on the information on energy consumption, progress of the mining activity.

7. The device (7) as claimed in claim 6, configured to classify, based on the established progress, a working status of the machine (6).

8. The device (7) as claimed in claim 7, configured to:
- monitor a transition between consecutive working statuses of the machine (6), and
- determine, based on the transition, start and/or stop of the mining activity.

9. The device (7) as claimed in any of the preceding claims, configured to determine the energy consumption of the machine (6) based on electricity information received from a power grid (5) from which the machine (6) receives its energy or electricity information about a battery of the machine (6) from which the machine (6) receives its energy.

10. The device (7) as claimed in any of claims 6-9, configured to establish the progress of the mining activity by determining changes in the energy consumption of the machine (6).

11. A computer program (32) for a device (7) for use in mining activity scheduling, the computer program (32) comprising computer program code, which, when executed on at least one processor (30) causes the at least one processor (30) to perform the method (20) according to any one of claims 1-5.

12. A computer program product (31) comprising a computer program (32) as claimed in claim 11 and a computer readable means on which the computer program (32) is stored.
